# FASCICULE DE BREVET EUROPEEN

(11) **EP 2 890 619 B1**
(45) Date de publication et mention de la délivrance du brevet: **13.07.2016**
(21) Numéro de dépôt: 13741784.6
(22) Date de dépôt: 29.07.2013
(51) Int. Cl.: B65D 35/12, B29C 45/14

(54) **TÊTE DE TUBE AMELIORÉE COMPRENANT UN INSERT FORMANT BARRIÈRE ET PERMETTANT UN CENTRAGE DUDIT INSERT**
VERBESSERTER ROHRKOPF MIT BARRIEREFORMENDEM EINSATZ MIT ZENTRIERUNG DES EINSATZES
IMPROVED TUBE HEAD COMPRISING A BARRIER-FORMING INSERT, ALLOWING CENTERING OF THE INSERT

(30) Priorité: 28.08.2012 FR 1258053
(43) Date de publication de la demande: 08.07.2015
(73) Titulaire: Albéa Services, 92230 Gennevilliers (FR)
(72) Inventeur: MAURICE, Thierry, F-51000 Chalons En Champagne (FR)
(74) Mandataire: Gevers & Orès
(86) Numéro de dépôt international: PCT/EP2013/065889
(87) Numéro de publication internationale: WO 2014/032880

(56) Documents cités:
- GB-A- 2 098 917
- US-A- 3 295 725

## Description

### DOMAINE TECHNIQUE GENERAL

La présente invention concerne les tubes pour le stockage et la distribution de produits, typiquement pâteux, liquides ou sous forme de gel. Elle trouve une application particulière pour des produits cosmétiques.

### ETAT DE L'ART

Les tubes souples sont très fréquemment utilisés pour la distribution de liquides, pâtes et gels. Dans de nombreuses applications, divers types de matières plastiques sont utilisés pour la fabrication des tubes.

Un problème récurrent avec les tubes plastiques est qu'ils ne permettent pas d'empêcher la pénétration de certains gaz et liquides dans le tube, ce qui altère le contenu du tube, ou au contraire l'évacuation de certains composants d'un produit contenu dans le tube, ce qui conduit à la dégradation du produit lui-même.

Afin d'éviter ce problème, il a été proposé de prévoir des obstacles, en particulier dans la région de la tête du tube, pour inhiber l'infiltration et la sortie des composants indésirables au travers de la tête du tube.

On incorpore ainsi de manière conventionnelle un insert, également connu sous le nom de rondelle, dans la tête du tube afin de former une barrière protectrice.

Cet insert comprend typiquement une couche métallique permettant de réaliser cet effet barrière.

Toutefois, cette solution d'ajout d'un insert pose une autre problématique découlant de l'insert lui-même. Il a en effet été constaté que certains produits pouvant être contenus dans des tubes corrodent l'insert métallique, en particulier au niveau de ses bords.

Cette corrosion peut corrompre le contenu du tube, altérer la capacité du tube à protéger le produit et le rendre inesthétique, ce qui est problématique en particulier dans le domaine des produits cosmétiques où l'apparence du produit joue un rôle important.

Plusieurs solutions ont été proposées afin de protéger l'insert, et en particulier ses bords des risques de corrosion, par exemple en repliant sur elles-mêmes les bordures de la rondelle, mais ces solutions ne s'avèrent pas pleine satisfaisantes soit en raison de leur impact sur l'effet barrière de l'insert, soit en raison des contraintes techniques associées. En outre, lors de l'injection de la matière plastique formant la tête de tube, l'insert est déformé, en particulier à ses extrémités, ce qui en impacte le recouvrement et peut ainsi conduire à des inserts ayant des extrémités exposées, et ramène donc le problème de la corrosion de la couche métallique de l'insert.

### PRESENTATION DE L'INVENTION

La présente invention vise à proposer une structure de tête de tube ne présentant pas de tels inconvénients ainsi qu'un moule pour la fabrication d'une telle tête de tube.

A cet effet, l'invention propose une tête de tube pour produit de consistance fluide à pâteuse, ladite tête de tube étant réalisée en matière plastique à partir d'un moule comprenant un mandrin et adaptée pour être associée à une jupe afin de former un tube ayant un volume interne, et comprenant
- un goulot présentant à une première extrémité une ouverture par laquelle le produit est extrait du tube,
- un épaulement relié à une seconde extrémité du goulot opposée à la première extrémité,
- un insert formant barrière disposé sur la surface interne de l'épaulement, ledit insert comprenant au moins une couche métallique et présentant une bordure externe recouverte de manière continue par un support externe en matériau plastique formant la tête de tube, ainsi qu'un orifice interne définissant une bordure interne,
   caractérisée en ce que la bordure interne de l'insert est recouverte de manière discontinue par le matériau plastique formant la tête de tube, de sorte qu'une portion de la face de l'insert orientée vers le volume interne du tube et adjacente à ladite bordure interne est recouverte par un support interne, le recouvrement de la bordure interne de l'insert étant interrompu par des zones de l'insert au contact de volumes formant saillie dudit mandrin lors du moulage.

En variante, ladite tête de tube présente une ou plusieurs des caractéristiques suivantes, prises indépendamment ou en combinaison :
- ledit insert est linéaire entre sa bordure interne et sa bordure externe,
- l'orifice interne est dans l'alignement du goulot,
- le recouvrement de la bordure interne (54) de l'insert (44) est interrompu par au moins une rainure,
- le recouvrement de la bordure interne (54) de l'insert (44) est interrompu par au moins trois rainures, lesdites rainures étant réparties régulièrement autour du goulot,
- le recouvrement de la bordure interne de l'insert est interrompu par six rainures dans le recouvrement de la bordure interne lesdites rainures étant réparties régulièrement autour du goulot,
- ledit insert a une forme de tronc de cône, convergeant de sa bordure externe vers sa bordure interne,
- ledit insert comprend trois couches superposées, respectivement une couche supérieure en matière plastique, une couche interne métallique, et une couche inférieure en matière plastique.

L'invention concerne également un tube pour produit de consistance fluide à pâteuse comprenant une tête de tube selon l'une des revendications précédentes.

L'invention concerne en outre un moule pour la fabrication d'une tête de tube en matière plastique comprenant un insert formant barrière, ledit moule comprenant :
- un mandrin formant une partie mâle du moule, ledit mandrin comprenant une tête sensiblement cylindrique pour la formation du goulot, et un épaulement s'étendant à partir de ladite tête,
- une partie femelle du moule définissant une cavité dans laquelle le mandrin vient s'insérer, ainsi qu'un canal d'injection, ledit moule étant caractérisé en ce que
- le mandrin comprend des volumes formant saillie adaptés pour permettre le positionnement d'un insert sur ledit mandrin, de sorte que l'injection de plastique dans le moule entoure de manière discontinue la bordure interne dudit insert, et qu'une portion de la face de l'insert orientée vers l'épaulement du mandrin et adjacente à ladite bordure interne soit recouverte de matière plastique lors de l'injection, les zones de l'insert au contact desdits volumes formant saillie n'étant pas recouvertes de matière plastique.

En variante, ledit moule présente une ou plusieurs des caractéristiques suivantes, prises indépendamment ou en combinaison :
- ledit mandrin comprend au moins trois nervures de centrage s'étendant longitudinalement sur ladite tête,
- lesdites nervures de centrage sont adaptées pour permettre le positionnement d'un insert sur ledit mandrin, de sorte que l'injection de plastique dans le moule entoure de manière discontinue la bordure interne dudit insert, les zones de l'insert au contact desdites nervures n'étant pas recouvertes de matière plastique,
- ledit mandrin comprend une rainure périphérique à la jonction entre la tête et l'épaulement,
- ladite rainure périphérique est adaptée de manière à ce qu'une portion de la face de l'insert orientée vers le l'épaulement du mandrin et adjacente à ladite bordure interne soit recouverte de matière plastique lors de l'injection.
- ledit épaulement a une forme de tronc de cône, de manière à recevoir un insert ayant une forme de tronc de cône, convergeant de sa bordure externe vers sa bordure interne.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 présente une vue en coupe partielle d'un tube selon un aspect de l'invention,
- Les figures 2 et 3 présentent des vues détaillées de portions de la figure 1,
- La figure 4 présente une vue éclatée de la tête de tube présentée sur la figure 1 et d'une partie de l'outillage adapté à sa fabrication,
- La figure 5 présente une vue de côté de l'outillage présenté sur la figure 4,
- Les figures 6 à 9 présentent des vues en coupe de plusieurs étapes d'un procédé de fabrication d'une tête de tube selon un aspect de l'invention,
- La figure 10 présente une vue en coupe de la tête de tube selon un axe X-X défini sur la figure 9,
- Les figures 11 et 12 présentent deux vues en coupe d'une portion de tête de tube selon un aspect de l'invention,
- La figure 13 présente une vue détaillée d'un exemple de structure d'insert.

Sur l'ensemble des figures, les éléments identiques sont repérés par des références numériques communes.

### DESCRIPTION DETAILLEE

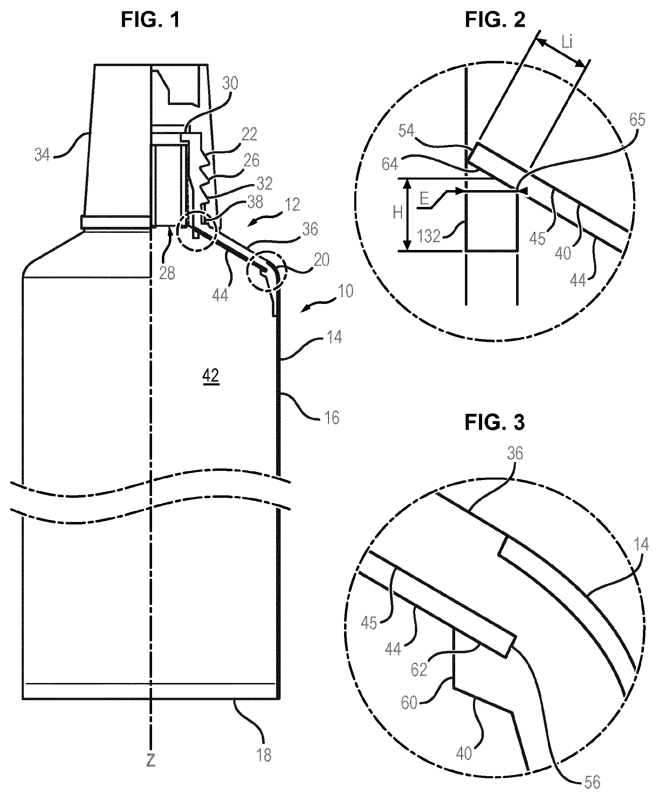

La figure 1 présente une vue en coupe partielle d'un tube 10 selon un aspect de l'invention ; les figures 2 et 3 présentent des vues détaillées de portions de la figure 1.

Le tube 10 comprend une tête de tube 12 liée à une jupe 14 formant un corps tubulaire 16, relié à la tête 12 à une première extrémité 20 et fermé à une seconde extrémité 18 opposée à la première extrémité 20. On définit un axe longitudinal du tube 10, repéré par l'axe Z sur la figure 1, et que l'on retrouvera sur les figures suivantes.

La tête de tube 12 comprend un corps 22 en matière plastique présentant un goulot 26 ayant un conduit interne 28 et débouchant à une extrémité libre 30.
Le goulot 26 présente un filetage externe 32, de manière à coopérer avec un bouchon 34 comprenant un filetage interne complémentaire pour fermer le tube 10.

Une épaule 36 s'étend à partir d'une extrémité 38 du goulot 26 opposée à son extrémité libre 30, le goulot 26 et l'épaule 36 étant formés d'une seule pièce de matière.
L'épaule 36 définit une surface interne 40 dirigée vers le volume interne 42 du tube 10.

La tête de tube 12 est liée à la jupe 14, typiquement en surmoulant la tête de tube 12 sur la jupe 14, ou par exemple par soudage ou collage en assemblant la jupe 14 sur la tête de tube 12 formée préalablement, notamment par injection ou injection compression, ou par toutes autres techniques.

La jupe 14 est typiquement formée de plastique et/ou de métal laminé ; par exemple un assemblage multicouches comprenant une ou plusieurs couches de matériau métallique tel que de l'Aluminium, et une ou plusieurs couches de plastique, de telles compositions étant bien connues de l'homme de l'art.

La tête de tube 12 comprend en outre un insert 44, qui recouvre une portion 45 d'une surface interne 40 de l'épaulement 26.

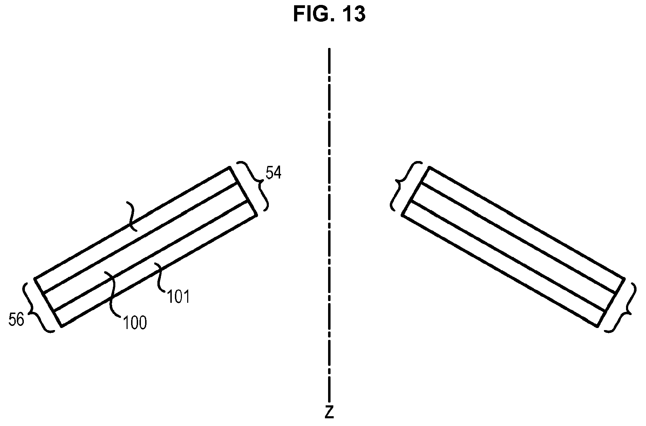

L'insert 44 comprend typiquement une couche métallique 100, par exemple une couche d'aluminium, disposée entre deux couches protectrices 101 en matériau plastique qui recouvrent les deux surfaces opposées de la couche d'aluminium 100, comme représenté sur la figure 13.
L'insert 44 tel qu'illustré est un disque comprenant une ouverture centrale 50 et mis en forme de tronc de cône. On définit ainsi des surfaces supérieure et inférieure, ainsi qu'une bordure interne 54 et une bordure externe 56 de l'insert 44 entre lesquelles l'insert 44 est sensiblement linéaire. Comme indiqué précédemment, ces bordures interne 54 et externe 56 sont typiquement des points de faiblesse de l'insert, en ce que la couche métallique formant l'insert 44 peut y être accessible ce qui l'expose à la corrosion par le produit contenu dans le tube 10.
On comprend bien que la présente invention peut également s'appliquer à un insert 44 plat, intégré à une tête de tube ayant un épaulement sensiblement plan.

Comme représenté sur les figures, la bordure externe 56 de l'insert 44 est entourée de matière plastique formant de la tête de tube, notamment via un support 60 recouvrant la bordure externe 56 de l'insert 44 ainsi qu'une portion 62 de la périphérie extérieure de la face de l'insert 44 orientée vers le volume interne 42 du tube 10.

Le support 60 forme ainsi un épaulement au niveau de la bordure externe 56 de l'insert 44, de sorte que l'insert 44 soit enserré entre l'épaule 36 de la tête de tube 12 et le support externe 60 sur une portion 62 de sa longueur adjacente à sa bordure externe 56.

De la même manière, la tête de tube 12 comprend également un support interne 132 similaire au support 60 externe présenté précédemment, recouvrant de matériau plastique la bordure interne 54 de l'insert 44 ainsi qu'une portion 64 de la face de l'insert 44 orientée vers le volume interne 42 du tube 10 et adjacente à la bordure interne 54.
La bordure interne 54 de l'insert 44 est ainsi enserrée entre l'épaule 36 de la tête de tube 12 et le support interne 132 sur une portion de sa longueur adjacente à sa bordure interne 54.
Ce support interne 132 assure la protection de la bordure interne 54 de l'insert 44 contre la corrosion qui pourrait résulter du contact avec le produit contenu dans le volume interne 42 du tube 10.

On définit une longueur Li correspondant à la longueur de l'insert 44 recouverte par le support interne 132, ainsi que la largeur E et l'épaisseur H du support interne 132. Ces dimensions sont avantageusement telles que E est supérieur ou égal à Li, et/ou H est supérieur ou égal à Li, de manière à s'assurer que la bordure interne 54 de l'insert 44 demeure entouré par le support interne 132 même dans le cas où la bordure interne 54 se plie, par exemple lors de l'injection. L'épaisseur H est définie comme l'épaisseur moyenne du support interne 132 mesurée à partir de la face de l'insert 44 orientée vers le volume interne 42 du tube 10 selon une direction parallèle à la direction longitudinale Z du tube 10, sur la longueur Li de la face de l'insert 44 orientée vers le volume interne 42 du tube 10 recouverte par le support interne 132, préalablement à une éventuelle déformation de l'insert 44. Cette épaisseur moyenne du support interne 132 est ainsi calculée sur toute la longueur Li de la portion 64 de la périphérie intérieure de la face de l'insert orientée vers le volume interne 42 du tube 10 recouverte par le support interne 132, préalablement à une éventuelle déformation de l'insert 44.
On définit un point de jonction 65 à la jonction entre l'insert 44 et le support interne 132, ce point de jonction 65 étant le point de la face interne de l'insert 44 orientée vers l'intérieur 42 du tube 10 le plus externe radialement par rapport à l'axe Z qui est recouvert par le support interne 132.

La largeur E est mesurée perpendiculairement à l'axe Z, à partir du point de jonction 65 de la face interne de l'insert 44 orientée vers l'intérieur 42 du tube 10.

Le support interne 132 est de plus avantageusement dimensionné de manière à ce que la ou les relations H≥Li et/ou E≥Li soient vérifiées même en cas d'imperfections lors de la découpe ou du centrage de l'insert 44.
L'épaisseur H et la largeur E du support interne 132 sont ainsi dimensionnées de manière à prendre en compte des tolérances importantes lors de la découpe de l'insert 44.

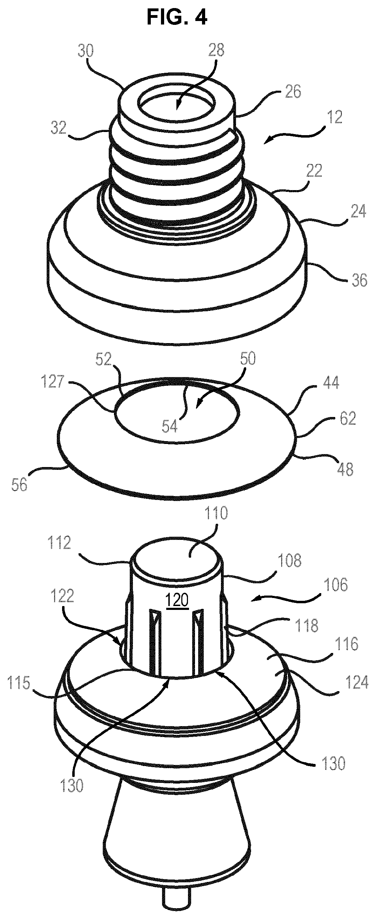

On détaille le procédé de fabrication de la tête de tube 12 telle que présentée ainsi que le positionnement de l'insert dans la tête de tube 12 en référence aux figures 4 à 10.

La figure 4 représente une vue éclatée de la tête de tube 12, de l'insert 44 et d'un mandrin 106 (ou plus généralement un outil mâle) de moule 100 pour la réalisation de la tête de tube 12.
Le mandrin 106 comprend une section de tête 108 sensiblement cylindrique adaptée de manière à former la surface interne du goulot 26 de la tête de tube 12, et un épaulement 114 sensiblement tronconique adaptée pour former la surface interne de l'épaule 36 de la tête de tube 12. La tête 108 du mandrin 106 présente une extrémité libre 110, typiquement munie d'un chanfrein 112 afin de ne pas présenter un angle vif.

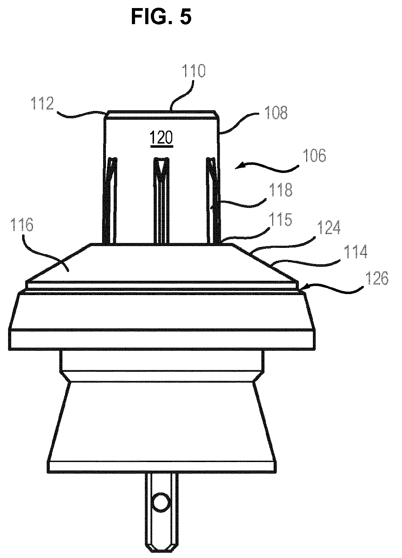

Comme représenté sur les figures 4 et 5, la tête 108 du mandrin 106 comprend des volumes formant saillie, ces volumes étant adaptés pour positionner l'insert 44 lorsque ce dernier est disposé sur le mandrin 108. Plus précisément, la tête 108 du mandrin 106 comprend une ou plusieurs nervures de centrage 118 s'étendant selon la direction longitudinale de la tête 108, par exemple trois ou six nervures réparties régulièrement sur la périphérie de la tête 108.
Le mandrin 106 comprend en outre une rainure périphérique 122 s'étendant sensiblement à la base de la tête 108 du mandrin 106, au niveau de la jonction entre la tête 108 et l'épaulement 114, permettant de former la base du goulot de la tête de tube 12, et le support interne 132 recouvrant une portion de la face de l'insert 44 orientée vers le volume interne 42 du tube 10 et adjacente à la bordure interne 54 de l'insert 44.

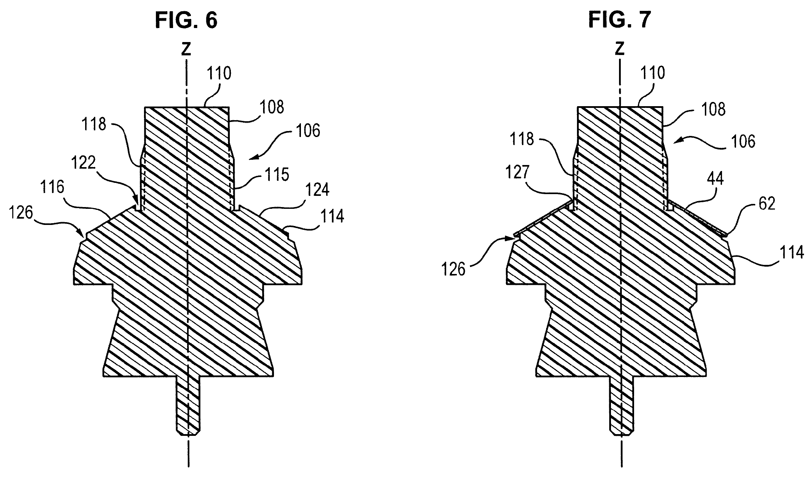

On présente un exemple d'utilisation d'un tel mandrin sur les figures 6 à 9.

La figure 6 présente une vue en coupe d'un mandrin 106 tel que décrit précédemment en référence aux figures 4 et 5.

La figure 7 représente le mandrin 106 sur lequel est disposé un insert 44 telle que décrit précédemment.
L'insert 44 est mis en appui sur l'épaulement 114 du mandrin 106 et est centré autour de la tête 108 du mandrin 106 via les nervures de centrage 118 qui viennent en appui contre la bordure interne 54 de l'insert 44.

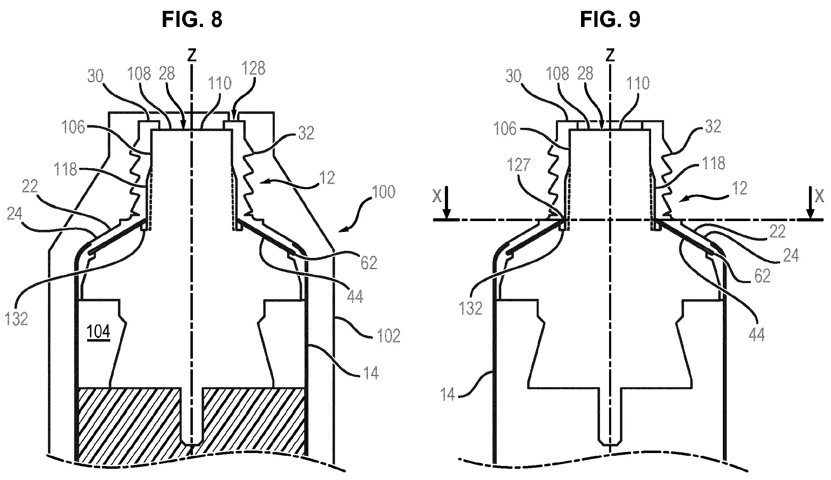

La figure 8 présente le mandrin 106 et l'insert 44 associés avec une partie femelle 102 du moule définissant une cavité dans laquelle le mandrin 106 vient s'insérer, ainsi qu'un canal d'injection 128 typiquement disposé de manière à se situer niveau de l'extrémité libre 30 de la tête de tube 12.
Le mandrin 106 et la partie femelle 102 du moule définissent ainsi un espace interne dans lequel est injecté le matériau formant la tête de tube 12.

Dans le mode de réalisation représenté, la jupe 14 est positionnée dans le moule préalablement à l'injection, de manière à surmouler la tête de tube 12 sur la jupe 14.
Comme on peut le voir sur les figures, la matière plastique injectée vient recouvrir partiellement l'insert 44, c'est-à-dire recouvrir sa face opposée au volume interne 42 du tube 10, ses bordures interne 54 et externe 56, ainsi que les deux postions adjacentes à ces bordures et orientées vers le volume interne 42 du tube 10.

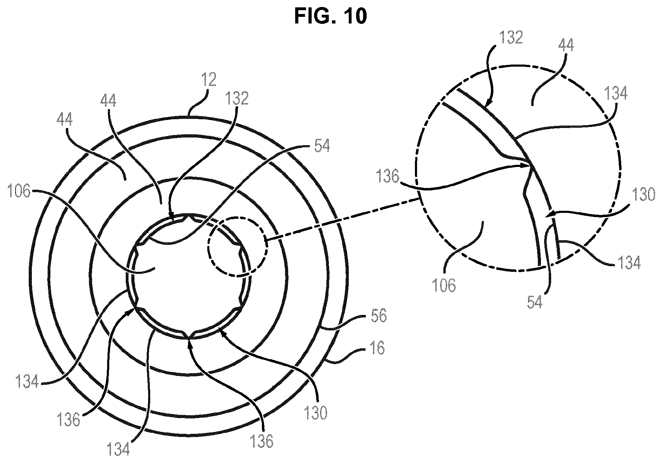

La figure 9 présente la tête de tube 12 ainsi formée avec le mandrin 106, la partie femelle 102 du moule ayant été retirée.
On repère sur cette figure un plan X-X, définissant le plan de coupe de la tête de tube 12 sur la figure 10.

La figure 10 est une vue en coupe selon le plan X-X défini précédemment de la tête de tube 12, met en avant la géométrie du goulot 26 de la tête de tube 12, et en particulier le positionnement de l'insert 44.
Cette figure représente plus particulièrement l'effet des nervures de centrage 118 du mandrin 106 sur le goulot 26 de la tête de tube 12, et les rainures 136 qui en résultent. Ces rainures 136 définissent des points au niveau desquels l'insert 44 est directement accessible, et n'est pas recouvert par le matériau formant la tête de tube 12. Comme on le voit sur la figure 10, à l'exception des rainures 136, la bordure interne 54 de l'insert 44 est recouverte de matière plastique, la protégeant ainsi de la corrosion.
Les zones de contact possibles entre la bordure interne 54 de l'insert 44 et le produit contenu dans le tube 10 étant limitées aux rainures, elles sont donc fortement réduites, ce qui rend le risque de corrosion de l'insert 44 très faible tout en permettant un centrage de l'insert 44 sur le moule 100 pour l'injection

De plus, on comprend bien qu'en raison du jeu fonctionnel résultant de la fabrication des différentes pièces (notamment de l'insert 44) et nécessaire afin de permettre le positionnement de l'insert 44 sur le mandrin 106, une fine épaisseur de matière plastique peut venir recouvrir les zones de l'insert en appui contre les nervures 118 du mandrin 106, une telle épaisseur minime de matière plastique ne formant pas un recouvrement effectif de l'insert 44.

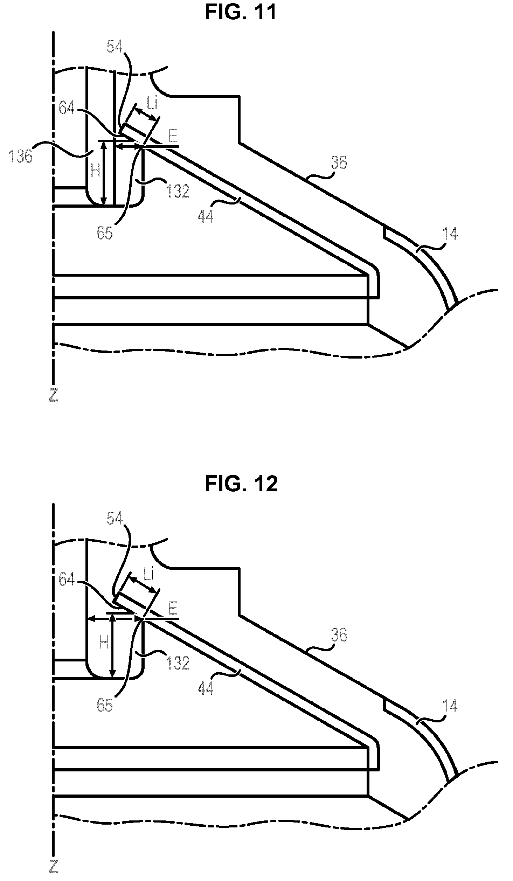

Les figures 11 et 12 présentent deux vues en coupe d'une portion de tête de tube telle que présentée précédemment, la figure 11 étant une vue en coupe selon un plan passant par une rainure 136 décrite précédemment, tandis que le plan de coupe utilisé pour la figure 12 ne passe pas par une telle rainure 136.
On représente sur ces deux figures les valeurs Li, H et E. On voit clairement que l'épaisseur E du support interne 132 est moindre au niveau d'une rainure 136, l'épaisseur du support interne 132 étant réduite de la profondeur de la rainure 136.
Les relations H≥Li et/ou E≥Li sont avantageusement vérifiées que ce soit au niveau d'une rainure 136 ou non, assurant ainsi une protection de la bordure interne 54 de l'insert 44 même au niveau des rainures 136.
On voit bien sur ces figures que même en cas d'inflexion de l'insert 44 au niveau de sa bordure interne 54, cette dernière va demeurer enveloppée par le support interne 132 du fait des relations entre les valeurs H, Li et E précédemment citées.

## Revendications

1. Tête de tube (12) pour produit de consistance fluide à pâteuse, ladite tête de tube (12) étant réalisée en matière plastique à partir d'un moule comprenant un mandrin et adaptée pour être associée à une jupe (14) afin de former un tube (10) ayant un volume interne, et comprenant
- un goulot (26) présentant à une première extrémité (30) une ouverture par laquelle le produit est extrait du tube (10),
- un épaulement (36) relié à une seconde extrémité (38) du goulot (26) opposée à la première extrémité (30),
- un insert (44) formant barrière disposé sur la surface interne de l'épaulement (36), ledit insert comprenant au moins une couche métallique et présentant une bordure externe (56) recouverte de manière continue par un support (60) externe en matériau plastique formant la tête de tube (12), ainsi qu'un orifice interne définissant une bordure interne (54),
**caractérisée en ce que** la bordure interne (54) de l'insert (44) est recouverte de manière discontinue par le matériau plastique formant la tête de tube (12), de sorte qu'une portion de la face de l'insert orientée vers le volume interne (42) du tube (10) et adjacente à ladite bordure interne (54) est recouverte par un support interne (132), le recouvrement de la bordure interne (54) de l'insert (44) étant interrompu par des zones de l'insert au contact de volumes formant saillie dudit mandrin lors du moulage.

2. Tête de tube (12) selon la revendication 1, dans laquelle l'orifice interne est dans l'alignement du goulot.

3. Tête de tube (12) selon l'une des revendications 1 ou 2, dans laquelle le recouvrement de la bordure interne (54) de l'insert (44) est interrompu par au moins une rainure (136).

4. Tête de tube (12) selon l'une quelconque des revendications 1 à 3, dans laquelle le recouvrement de la bordure interne (54) de l'insert (44) est interrompu par au moins trois rainures (136), lesdites rainures étant réparties régulièrement autour du goulot (26).

5. Tête de tube (12) selon l'une des revendications 3 ou 4, dans laquelle le recouvrement de la bordure interne (54) de l'insert (44) est interrompu par six rainures (136) dans le recouvrement de la bordure interne (54) lesdites rainures étant réparties régulièrement autour du goulot (26).

6. Tête de tube (12) selon l'une des revendications 1 à 52, dans laquelle ledit insert (44) a une forme de tronc de cône, convergeant de sa bordure externe (56) vers sa bordure interne (54).

7. Tête de tube (12) selon l'une des revendications 1 à 6, dans laquelle ledit insert (44) comprend trois couches superposées, respectivement une couche supérieure en matière plastique, une couche interne métallique, et une couche inférieure en matière plastique.

8. Tube (10) pour produit de consistance fluide à pâteuse comprenant une tête de tube (12) selon l'une des revendications précédentes.

9. Moule (100) pour la fabrication d'une tête de tube (12) en matière plastique comprenant un insert (44) formant barrière, ledit moule (100) comprenant :
- un mandrin (106) formant une partie mâle du moule, ledit mandrin (106) comprenant une tête (108) sensiblement cylindrique pour la formation du goulot, et un épaulement (114) s'étendant à partir de ladite tête (108),
- une partie femelle (102) du moule définissant une cavité dans laquelle le mandrin (106) vient s'insérer, ainsi qu'un canal (128) d'injection, ledit moule (100) étant **caractérisé en ce que**
- le mandrin (106) comprend des volumes formant saillie adaptés pour permettre le positionnement d'un insert (44) sur ledit mandrin (106), de sorte que l'injection de plastique dans le moule (100) entoure de manière discontinue la bordure interne (54) dudit insert (44) et qu'une portion de la face de l'insert orientée vers l'épaulement (114) du mandrin (106) et adjacente à ladite bordure interne (54) soit recouverte de matière plastique lors de l'injection, les zones de l'insert au contact desdits volumes formant saillie n'étant pas recouvertes de matière plastique.

10. Moule (100) selon la revendication 9, dans lequel lesdits volumes formant saillie sont au moins trois nervures de centrage (118) s'étendant longitudinalement sur ladite tête (108), lesdites nervures de centrage (118) étant adaptées pour permettre le positionnement dudit insert (44) sur ledit mandrin (106), de sorte que l'injection de plastique dans le moule (100) entoure de manière discontinue la bordure interne (54) dudit insert (44), les zones de l'insert au contact desdites nervures (118) n'étant pas recouvertes de matière plastique.

11. Moule (100) selon l'une des revendications 9 à 10, dans lequel ledit mandrin (106) comprend une rainure périphérique (122) à la jonction entre la tête (108) et l'épaulement (114), ladite rainure périphérique étant adaptée de manière à ce que ladite portion de la face de l'insert orientée vers le l'épaulement (114) du mandrin (106) et adjacente à ladite bordure interne (54) soit recouverte de matière plastique lors de l'injection.

12. Moule (100) selon l'une des revendications 9 à 11, dans lequel ledit épaulement (114) a une forme de tronc de cône, de manière à recevoir un insert (44) ayant une forme de tronc de cône, convergeant de sa bordure externe vers sa bordure interne.

## Patentansprüche

1. Rohrkopf (12) für ein Produkt mit einer fluiden bis pastösen Konsistenz, wobei der Rohrkopf (12) aus einem Kunststoffwerkstoff ausgehend von einer Form hergestellt ist, die einen Dorn umfasst, und geeignet ist, mit einer Schürze (14) verbunden zu werden, um ein Rohr (10), das ein Innenvolumen hat, zu bilden, und umfasst
- einen Hals (26), der an einem ersten Ende (30) eine Öffnung aufweist, durch die das Produkt aus dem Rohr (10) entfernt wird,
- eine Schulter (36), die mit einem zweiten Ende (38) des Halses (26) gegenüber dem ersten Ende (30) verbunden ist,
- einen Einsatz (44), der eine Barriere bildet, die auf der inneren Oberfläche der Schulter (36) angeordnet ist, wobei der Einsatz mindestens eine Metallschicht umfasst und eine Außenkante (56), die kontinuierlich mit einem äußeren Träger (60) aus Kunststoffwerkstoff bedeckt ist, welcher den Rohrkopf (12) bildet, sowie eine innere Öffnung aufweist, die eine Innenkante (54) definiert,
**dadurch gekennzeichnet, dass** die Innenkante (54) des Einsatzes (44) diskontinuierlich durch das Kunststoffmaterial bedeckt ist, das den Rohrkopf (12) bildet, so dass ein Teil der Seite des Einsatzes, der in Richtung des Innenvolumens (42) des Rohrs (10) gerichtet ist und an die Innenkante (54) angrenzt, mit einem inneren Träger (132) bedeckt ist, wobei die Bedeckung der Innenkante (54) des Einsatzes (44) durch Bereiche des Einsatzes im Kontakt mit den Volumen unterbrochen ist, die eine Auskragung des Dorns während des Formgusses bilden.

2. Rohrkopf (12) nach Anspruch 1, wobei die innere Öffnung mit dem Hals fluchtet.

3. Rohrkopf (12) nach einem der Ansprüche 1 oder 2, wobei die Bedeckung der Innenkante (54) des Einsatzes (44) durch mindestens eine Nut (136) unterbrochen ist.

4. Rohrkopf (12) nach einem der Ansprüche 1 bis 3, wobei die Bedeckung der Innenkante (54) des Einsatzes (44) durch mindestens drei Nuten (136) unterbrochen ist, wobei die Nuten gleichmäßig um den Hals (26) verteilt sind.

5. Rohrkopf (12) nach einem der Ansprüche 3 oder 4, wobei die Bedeckung der Innenkante (54) des Einsatzes (44) durch sechs Nuten (136) in der Bedeckung der Innenkante (54) unterbrochen ist, wobei die Nuten gleichmäßig um den Hals (26) verteilt sind.

6. Rohrkopf (12) nach einem der Ansprüche 1 bis 52, wobei der Einsatz (44) eine Form eines Kegelstumpfes hat, die von seiner Außenkante (56) in Richtung seiner Innenkante (54) konvergiert.

7. Rohrkopf (12) nach einem der Ansprüche 1 bis 6, wobei der Einsatz (44) drei überlagerte Schichten, eine obere Schicht aus Kunststoffwerkstoff, eine innere Metallschicht bzw. eine untere Schicht aus Kunststoffwerkstoff, umfasst.

8. Rohr (10) für ein Produkt mit einer fluiden bis pastösen Konsistenz, das einen Rohrkopf (12) nach einem der vorhergehenden Ansprüche umfasst.

9. Form (100) zur Herstellung eines Rohrkopfes (12) aus Kunststoffwerkstoff, der einen Einsatz (44) umfasst, der eine Barriere bildet, wobei die Form (100) umfasst:
- einen Dorn (106), der ein Einsteckteil der Form bildet, wobei der Dorn (106) einen im Wesentlichen zylindrischen Kopf (108) für die Bildung des Halses und eine Schulter (114) umfasst, die sich ausgehend von dem Kopf (108) erstreckt,
- ein Aufnahmeteil (102) der Form, das einen Hohlraum, in den der Dorn (106) eingesteckt wird, sowie einen Einspritzkanal (128) definiert, wobei die Form (100) **dadurch gekennzeichnet ist, dass**
- der Dorn (106) Volumen umfasst, die eine Auskragung bilden, die angepasst sind, die Positionierung eines Einsatzes (44) auf dem Dorn (106) zu ermöglichen, so dass die Einspritzung von Kunststoff in die Form (100) diskontinuierlich die Innenkante (54) des Einsatzes (44) umgibt, und dass ein Teil der Seite des Einsatzes, der zu der Schulter (114) des Dorns (106) gerichtet ist und an der Innenkante (54) angrenzt, während der Einspritzung mit Kunststoff bedeckt wird, wobei die Bereiche des Einsatzes im Kontakt mit den Volumen, welche die Auskragung bilden, nicht mit dem Kunststoffwerkstoff bedeckt werden.

10. Form (100) nach Anspruch 9, wobei die Volumen, welche die Auskragung bilden, mindestens drei Zentrierrippen (118) sind, die sich in Längsrichtung an dem Kopf (108) erstrecken, wobei die Zentrierrippen (118) angepasst sind, die Positionierung des Einsatzes (44) auf dem Dorn (106) zu ermöglichen, so dass die Einspritzung von Kunststoff in die Form (100) diskontinuierlich die Innenkante (54) des Einsatzes (44) umgibt, wobei die Bereiche des Einsatzes in Kontakt mit den Rippen (118) nicht mit Kunststoff bedeckt sind.

11. Form (100) nach einem der Ansprüche 9 bis 10, wobei der Dorn (106) eine Umfangsnut (122) an der Verbindung zwischen dem Kopf (108) und der Schulter (114) umfasst, wobei die Umfangsnut so angepasst ist, dass der Teil der Fläche des Einsatzes, der zu der Schulter (114) des Dorns (106) gerichtet ist und an der Innenkante (54) angrenzt, während der Einspritzung mit Kunststoffwerkstoff bedeckt wird.

12. Form (100) nach einem der Ansprüche 9 bis 11, wobei die Schulter (114) eine Form eines Kegelstumpfes hat, um einen Einsatz (44) aufzunehmen, der einer Form eines Kegelstumpfes hat, die von seiner Außenkante zu seiner Innenkante konvergiert.

## Claims

1. Tube head (12) for a product of liquid to pasty consistency, said tube head (12) being made of plastic, from a mould comprising a mandrel and adapted to be associated with a skirt (14) in order to form a tube (10) having an internal volume, and comprising
- a neck (26) having at a first end (30) an opening through which the product is extracted from the tube (10),
- a shoulder (36) connected to a second end (38) of the neck (26) opposite the first end (30),
- a barrier-forming insert (44) arranged on the inner surface of the shoulder (36), said insert comprising at least one metal layer and having an outer edge (56) continuously covered by a outer support (60) of plastic material forming the tube head (12), as well as an inner orifice defining an inner edge (54),
**characterised in that** the inner edge (54) of the insert (44) is discontinuously covered by the plastic material forming the tube head (12), in such a way that a portion of the face of the insert directed towards the internal volume (42) of the tube (10) and adjacent to said inner edge (54) is covered by an inner support (132), the covering of the inner edge (54) of the insert (44) being interrupted by zones of the insert in contact with volumes forming a protrusion of said mandrel during moulding.

2. Tube head (12) according to claim 1, wherein the inner orifice is in the alignment of the neck.

3. Tube head (12) according to one of claims 1 or 2, wherein the covering of the inner edge (54) of the insert (44) is interrupted by at least one groove (136).

4. Tube head (12) according to any of claims 1 to 3, wherein the covering of the inner edge (54) of the insert (44) is interrupted by at least three grooves (136), said grooves being evenly distributed around the neck (26).

5. Tube head (12) according to one of claims 3 or 4, wherein the covering of the inner edge (54) of the insert (44) is interrupted by six grooves (136) in the covering of the inner edge (54) said grooves evenly distributed around the neck (26).

6. Tube head (12) according to one of claims 1 to 52, wherein said insert (44) has the shape of a truncated cone, converging at its outer edge (56) towards its inner edge (54).

7. Tube head (12) according to one of claims 1 to 6, wherein said insert (44) comprises three superposed layers, respectively an upper layer made of plastic, an inner metal layer, and a lower layer made of plastic.

8. Tube (10) for a product of liquid to pasty consistency comprising a tube head (12) according to one of the preceding claims.

9. Mould (100) for the manufacturing of a plastic tube head (12) comprising a barrier-forming insert (44), said mould (100) comprising:
- a mandrel (106) forming a male portion of the mould, said mandrel (106) comprising a substantially circular head (108) for the formation of the neck, and a shoulder (114) extending from said head (108),
- a female portion (102) of the mould defining a cavity wherein the mandrel (106) is inserted, as well as an injection channel (128),
said mould (100) being **characterised in that**
- the mandrel (106) comprises volumes forming a protrusion adapted to allow for the positioning of an insert (44) on said mandrel (106), in such a way that the injection of plastic into the mould (100) discontinuously surrounds the inner edge (54) of the insert (44) and that a portion of the face of the insert directed towards the shoulder (114) of the mandrel (106) and adjacent to said inner edge (54) is covered with plastic during the injection, the volumes in contact with said volumes forming a protrusion not being covered with plastic.

10. Mould (100) according to claim 9, wherein said volumes forming a protrusion are at least three centring ribs (118) extending longitudinally on said head (108), said centring ribs (118) being adapted to allow for the positioning of said insert (44) on said mandrel (106), in such a way that the injection of plastic into the mould (100) discontinuously surrounds the inner edge (54) of said insert (44),
the zones of the insert in contact with said ribs (118) not being covered with plastic.

11. Mould (100) according to one of claims 9 to 10, wherein said mandrel (106) comprises a peripheral groove (122) at the junction between the head (108) and the shoulder (114), said peripheral groove being adapted in such a way that said portion of the face of the insert directed towards the shoulder (114) of the mandrel (106) and adjacent to said inner edge (54) is covered with plastic during the injection.

12. Mould (100) according to one of claims 9 to 11, wherein said shoulder (114) has the shape of a truncated cone, in such a way as to receive an insert (44) having the shape of a truncated cone, converging from its outer edge towards its inner edge.
